# EUROPÄISCHE PATENTSCHRIFT

(11) **EP 3 049 255 B1**
(45) Veröffentlichungstag und Bekanntmachung des Hinweises auf die Patenterteilung: **21.06.2017**
(21) Anmeldenummer: 14739786.3
(22) Anmeldetag: 11.07.2014
(51) Int. Cl.: B60C 1/00, C08L 9/00, C08L 9/06, B29B 7/74

(54) **SCHWEFELVERNETZBARE KAUTSCHUKMISCHUNG UND FAHRZEUGLUFTREIFEN**
SULPHUR-CROSS-LINKABLE RUBBER BLEND AND VEHICLE TYRE
MÉLANGE DE CAOUTCHOUC RÉTICULABLE AU SOUFRE ET PNEU DE VÉHICULE

(30) Priorität: 27.09.2013 DE 102013110719
(43) Veröffentlichungstag der Anmeldung: 03.08.2016
(73) Patentinhaber: Continental Reifen Deutschland GmbH, 30165 Hannover (DE)
(72) Erfinder: PETERS, Fabian, 30173 Hannover (DE); TORBRÜGGE, Thorsten, 30855 Langenhagen (DE); RECKER, Carla, 30167 Hannover (DE)
(74) Vertreter: Finger, Karsten
(86) Internationale Anmeldenummer: PCT/EP2014/064880
(87) Internationale Veröffentlichungsnummer: WO 2015/043789

(56) Entgegenhaltungen:
- EP-A1- 1 063 246
- EP-A1- 1 808 456
- EP-A1- 2 412 731
- EP-A1- 2 452 972
- US-A- 5 877 249
- US-A1- 2010 317 800
- US-A1- 2012 016 056

## Beschreibung

Die Erfindung betrifft eine schwefelvernetzbare Kautschukmischung, insbesondere für Laufstreifen von Fahrzeugluftreifen, und einen Fahrzeugluftreifen.

Harze, insbesondere Kohlenwasserstoffharze, sind seit langem bekannte Zuschlagstoffe für Kautschukmischungen für Laufstreifen von Fahrzeugluftreifen. Sie dienen vor allem als Verarbeitungshilfsmittel und bewirken die nötige Grünklebrigkeit der Kautschukmischungen. Ferner lassen sich durch Harze bestimmte Vulkanisateigenschaften wie Härte, Modul und Quellverhalten beeinflussen. Sie können auch als Vulkanisationsharze oder Haftvermittler eingesetzt werden. Typische in der Kautschukindustrie eingesetzte Klebharze sind z.B. Petroleumharze, Terpenharze, Kolophoniumharze, Phenol-Formaldehydharze und Cumaron-Inden-Harze.
Harze aus alpha-Methylstyrol sind als Zuschlagstoffe für Kautschukmischungen bekannt.
So wird die Verwendung von Harzen auf Basis von alpha-Methylstyrol in Kautschukmischungen z.B. in der EP 2412731 A1, EP 1559586 A1 und der DE 60201595 T2 beschrieben. Diese Schriften beschäftigen sich mit den Eigenschaften der darin offenbarten Kautschukmischungen im Hinblick auf zumindest eine der Anforderungen im Reifen, wie Abriebwiderstand, Rollwiderstand und Nassgriff, wobei die Kautschukmischungen bis zu 15 phr des Harzes enthalten.

Der Verwendung von größeren Mengen Harz sind im Stand der Technik aufgrund der begrenzten Löslichkeit im Polymersystem der jeweiligen Kautschukmischung Grenzen gesetzt.

In der US/2012/0016056 A1 wird beispielsweise eine Kautschukmischung für Laufstreifen mit Kieselsäure als Hauptfüllstoffkomponente offenbart, die nicht mehr als 25 phr eines Harzes aus alpha-Methylstyrol und Styrol enthält. Hierbei wird das Harz zusammen mit Öl vorvermischt, um die Verteilung des Harzes im Polymer zu verbessern. Diese Kautschukmischung soll hinsichtlich Rollwiderstandsverhalten, Nassgriffeigenschaften, Abriebwiderstand und Handling-Verhalten eine Verbesserung zeigen.

In der WO 2012/062534 A1 und der EP 0899297 werden beispielsweise Kautschukmischungen beschrieben, die bis zu 50 phr eines Kohlenwasserstoffharzes enthalten können. Diese Kautschukmischungen sollen den Zielkonflikt aus Rollwiderstand und/oder Abrieb vs. Nassgriff auf einem höheren Niveau lösen, wobei die in den Beispielen offenbarten Kautschukmischungen auch hier nur bis zu 15 phr des jeweiligen Kohlenwasserstoffharzes enthalten. In den offenbarten Beispielen enthalten alle Mischungen ausschließlich Ruß (70 phr) als Füllstoff.

Der Erfindung liegt nun die Aufgabe zugrunde, eine schwefelvernetzbare Kautschukmischung bereitzustellen, die ausgehend vom Stand der Technik eine weitere Verbesserung im Zielkonflikt Rollwiderstandsverhalten versus Nassgriffeigenschaften bei gleichzeitig verbesserten oder zumindest gleichen Reißeigenschaften zeigt.

Gelöst wird die Aufgabe erfindungsgemäß dadurch, dass die schwefelvernetzbare Kautschukmischung wenigstens folgende Bestandteile enthält:
- 60 bis 100 phr wenigstens eines Butadien-Kautschuks und
- 51 phr oder mehr wenigstens eines Kohlenwasserstoffharzes, welches zu 30 bis 100 Gew.-% aus aromatischen Monomeren aufgebaut ist.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Einfachheit halber wird im Rahmen der vorliegenden Erfindung das Kohlenwasserstoffharz, welches zu 30 bis 100 Gew.-% (Gewichtsprozent bezogen auf die Gesamtmasse des Kohlenwasserstoffharzes) aus aromatischen Monomeren aufgebaut ist, als Kohlenwasserstoffharz bezeichnet.

In bevorzugten Ausführungsformen der Erfindung, in denen das Kohlenwasserstoffharz zu 51 bis 100 Gew.-% aus aromatischen Monomeren aufgebaut ist, wird dieses der Einfachheit halber als "überwiegend aromatisches Kohlenwasserstoffharz" bezeichnet, da mehr als die Hälfte des Gewichtes aus aromatischen Bestandteilen (Monomeren) besteht.

Bei den Kohlenwasserstoffharzen und den überwiegend aromatischen Kohlenwasserstoffharzen sind somit Kohlenwasserstoffharze, die Copolymere aus aromatischen und nicht-aromatischen (aliphatischen) Monomeren sind, in der erfindungsgemäßen Kautschukmischung eingeschlossen.

In bevorzugten Ausführungsformen der Erfindung, in denen das Kohlenwasserstoffharz zu 100 Gew.-% aus aromatischen Monomeren aufgebaut ist, wird dieses der Einfachheit halber als "aromatisches Kohlenwasserstoffharz" bezeichnet.

Überraschenderweise liegt die erfindungsgemäße Kautschukmischung im Vergleich zum Stand der Technik auf einem höheren Performance-Niveau hinsichtlich der Indikatoren für Rollwiderstand und Nassgriff. Insbesondere weist die erfindungsgemäße Kautschukmischung überraschenderweise eine starke Verschiebung der Glasübergangstemperatur ausgehend von der Glasübergangstemperatur des Butadien-Kautschuks auf. Dies deutet auf eine überraschend gute Löslichkeit der vergleichsweise hohen Mengen des Kohlenwasserstoffharzes, bevorzugt überwiegend aromatischen Kohlenwasserstoffharzes, besonders bevorzugt aromatischen Kohlenwasserstoffharzes, im Butadien-Kautschuk hin.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.
Die oben genannten Kohlenwasserstoffharze werden im Rahmen dieser Erfindung nicht als Kautschuk betrachtet.

Die erfindungsgemäße Kautschukmischung enthält 60 bis 100 phr, bevorzugt 70 bis 100 phr, besonders bevorzugt 80 bis 100 phr, wenigstens eines Butadien-Kautschuks.

Bei dem Butadien-Kautschuk (= BR, Polybutadien) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften der Kautschukmischung erzielt.
Das eingesetzte Polybutadien kann mit den unten aufgeführten Modifizierungen und Funktionalisierungen endgruppenmodifiziert sein.

Die erfindungsgemäße Kautschukmischung enthält 51 phr oder mehr, bevorzugt 51 bis 300 phr, besonders bevorzugt 51 bis 150 phr, ganz besonders bevorzugt 51 bis 100 phr, wiederum ganz besonders bevorzugt 51 bis 85 phr, wenigstens eines Kohlenwasserstoffharzes, welches zu 30 bis 100 Gew.-% (Gewichtsprozent bezogen auf die Gesamtmasse des Kohlenwasserstoffharzes) aus aromatischen Monomeren aufgebaut ist. Bevorzugt ist das Kohlenwasserstoffharz zu 51 bis 100 Gew.-%, also überwiegend, aus aromatischen Monomeren aufgebaut. Besonders bevorzugt ist das überwiegend aromatische Kohlenwasserstoffharz zu 60 bis 100 Gew.-%, besonders bevorzugt zu 70 bis 100 Gew.-%, ganz besonders bevorzugt zu 80 bis 100 Gew.-%, wiederum ganz besonders bevorzugt zu 90 bis 100 Gew.-%, aus aromatischen Monomeren aufgebaut.
Gemäß einer bevorzugten Ausführungsform der Erfindung ist das Kohlenwasserstoffharz zu 100 Gew.-% aus aromatischen Monomeren aufgebaut und ist damit ein aromatisches Kohlenwasserstoffharz. Hiermit ergibt sich eine besonders gute Verbesserung der Kautschukmischung hinsichtlich des Zielkonfliktes aus Rollwiderstand und Nassgriff sowie eine Verbesserung der Wintereigenschaften, wobei sich ein möglichst niedriger Speichermodul E' im Temperaturbereich um -28 bis -32 °C positiv auf die Wintereigenschaften, insbesondere das Bremsverhalten, auswirkt. Das Kohlenwasserstoffharz ist bevorzugt aufgebaut aus wenigstens einem aromatischen Monomer aus der Gruppe enthaltend alpha-Methylstyrol und/oder Styrol und/oder Vinyltoluol und/oder Inden und/oder Cumaron und/oder Methylinden und/oder Methylcumaron.
Das Kohlenwasserstoffharz ist besonders bevorzugt aufgebaut aus wenigstens einem aromatischen Monomer aus der Gruppe bestehend aus alpha-Methylstyrol und/oder Styrol und/oder Vinyltoluol und/oder Inden und/oder Cumaron und/oder Methylinden und/oder Methylcumaron.

Das Kohlenwasserstoffharz kann daher ein Homopolymer und/oder ein Copolymer sein. Unter Homopolymer wird in der vorliegenden Anmeldung ein Polymer verstanden, welches gemäß Römpp Online Version 3.28 "aus Monomeren nur einer Art entstanden ist". Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.
Bei dem Vinyltoluol (auch ar-Methylstyrol) kann es sich um p-Vinyltoluol und/oder m-Vinyltoluol und/oder o-Vinyltoluol handeln.
Gemäß den Ausführungsformen, in denen das Kohlenwasserstoffharz zu weniger als 100 Gew.-%, also 30 bis 99,9999 Gew.-%, aus aromatischen Monomeren aufgebaut ist, enthält das Kohlenwasserstoffharz nicht-aromatische, also aliphatische, Monomere. Bei den aliphatischen Monomeren kann es sich um Monomere der C5-Erdölfraktion, z.B. Isopren, und/oder Monomere der Terpene und/oder Cycloolefine und/oder Olefine, wie z.B. Penten, handeln. Unter C5 ist zu verstehen, dass diese Monomere aus fünf Kohlenstoffatomen aufgebaut sind. Ferner kann die C5-Erdölfraktion Monomere (Bausteine) mit vier, also C4-Monomere, oder sechs Kohlenstoffatomen, C6-Monomere, enthalten.
Gemäß Römpp Online Lexikon, Version 3.36 ist "aliphatische Verbindungen" eine "Sammelbezeichnung [...] für funktionalisierte oder unfunktionalisierte organische Verbindungen, die kein aromatisches Ringsystem enthalten."

Besonders bevorzugt ist das Kohlenwasserstoffharz wenigstens aus alpha-Methylstyrol und Styrol aufgebaut und ist damit ein Copolymer aus alpha-Methylstyrol und Styrol, wobei es zu 30 bis 100 Gew.-%, bevorzugt 51 bis 100 Gew.-%, aus alpha-Methylstyrol und Styrol aufgebaut ist. Hierbei ist es z.B. denkbar, dass aliphatische Monomere zu 0 bis 70 Gew.%, bevorzugt 0 bis 49 Gew.-%, bspw. 5 Gew.-%, enthalten sind, wodurch sich ausgehend von 100 Gew.-% entsprechend der Anteil an aromatischen Monomeren verringert.

Ganz besonders bevorzugt ist das aromatische Kohlenwasserstoffharz aus alpha-Methylstyrol und Styrol aufgebaut und ist damit ein Copolymer aus alpha-Methylstyrol und Styrol, wobei es zu 100 Gew.-% aus alpha-Methylstyrol und Styrol aufgebaut ist. Hiermit ergeben sich eine besonders gute Verbesserung der Kautschukmischung hinsichtlich des Zielkonfliktes aus Rollwiderstand und Nassgriff sowie eine Verbesserung der Wintereigenschaften.

Das in der erfindungsgemäßen Kautschukmischung enthaltene
Kohlenwasserstoffharz, weist einen Erweichungspunkt gemäß ASTM E 28 (Ring und Ball) von 60 bis 200 °C, bevorzugt 60 bis 150 °C, besonders bevorzugt 60 bis 120 °C, ganz besonders bevorzugt 60 bis 100 °C, und wiederum ganz besonders bevorzugt 80 bis 90 °C auf. Ein derartiges Kohlenwasserstoffharz ist z.B. unter dem Handelsnamen SYLVATRAXX® 4401 der Firma Arizona Chemical Company erhältlich.
Hierdurch werden insbesondere bei der Verwendung hoher Mengen des Kohlenwasserstoffharzes von 51 phr oder mehr, bevorzugt 51 bis 300 phr, besonders bevorzugt 51 bis 150 phr, ganz besonders bevorzugt 51 bis 100 phr, wiederum ganz besonders bevorzugt 51 bis 85 phr, besonders gute Eigenschaften der Kautschukmischung hinsichtlich der Anforderungen an Rollwiderstand und Nassgriff erzielt, was u.a. durch eine überraschend gute Löslichkeit des Kohlenwasserstoffharzes in dem Butadien-Kautschuk erklärt
werden könnte.
Weiterhin weist das in der erfindungsgemäßen Kautschukmischung enthaltene Kohlenwasserstoffharz bevorzugt ein Molekulargewicht Mw (Gewichtsmittel) von 500 bis 5000 g/mol, besonders bevorzugt 500 bis 3000 g/mol, ganz besonders bevorzugt 500 bis 2500 g/mol, wiederum besonders bevorzugt 800 bis 2500 g/mol, wiederum ganz besonders bevorzugt 800 bis 2000 g/mol, auf. Ein derartiges Kohlenwasserstoffharz mit einem Molekulargewicht Mw von 1300 g/mol ist z.B. unter dem Handelsnamen SYLVATRAXX® 4401 der Firma Arizona Chemical Company erhältlich.

Weiterhin weist das in der erfindungsgemäßen Kautschukmischung enthaltene Kohlenwasserstoffharz bevorzugt ein Molekulargewicht Mz (Zentrifugenmittelwert) von 500 bis 10000 g/mol, besonders bevorzugt 1000 bis 10000 g/mol, ganz besonders bevorzugt 1000 bis 7000 g/mol, wiederum besonders bevorzugt 1500 bis 5000 g/mol, wiederum ganz besonders bevorzugt 1500 bis 3000 g/mol, wiederum ganz besonders bevorzugt 1700 bis 2300 g/mol auf. Ein derartiges Kohlenwasserstoffharz mit einem Zentrifugenmittelwert Mz von 2018 g/mol ist z.B. unter dem Handelsnamen SYLVATRAXX® 4401 der Firma Arizona Chemical Company erhältlich. Hierdurch werden insbesondere bei der Verwendung hoher Mengen des Kohlenwasserstoffharzes von 51 phr oder mehr, bevorzugt 51 bis 300 phr, besonders bevorzugt 51 bis 150 phr, ganz besonders bevorzugt 51 bis 100 phr, wiederum ganz besonders bevorzugt 51 bis 85 phr, besonders gute Eigenschaften der Kautschukmischung hinsichtlich der Anforderungen an Rollwiderstand und Nassgriff erzielt, was u.a. durch eine überraschend gute Löslichkeit des Kohlenwasserstoffharzes in dem Butadien-Kautschuk erklärt werden könnte. Die Bestimmung des Molekulargewichtes (Gewichtsmittel Mw und Zentrifugenmittelwert Mz) erfolgt mittels Gelpermeationschromatographie gemäß DIN 55672-1 (GPC mit Tetrahydofuran als Elutionsmittel, Polystyrol-Standard; Größenausschlußchromatographie; engl. SEC = size exclusion chromatography).

Die erfindungsgemäße Kautschukmischung enthält wie oben ausgeführt 60 bis 100 phr wenigstens eines Butadien-Kautschuks. Somit enthält die erfindungsgemäße Kautschukmischung, wenn sie weniger als 100 phr Butadien-Kautschuk enthält, wenigstens einen weiteren Kautschuk in Mengen von 0 bis 40 phr, bevorzugt 0 bis 30 phr, besonders bevorzugt 0 bis 20 phr, wenigstens aber 0,1 phr.

Der wenigstens eine weitere Kautschuk ist dabei ausgewählt aus der Gruppe, bestehend aus natürlichem Polyisopren und/oder synthetischem Polyisopren und/oder lösungspolymerisiertem Styrol-Butadien-Kautschuk und/oder emulsionspolymerisiertem Styrol-Butadien-Kautschuk und/oder Flüssigkautschuken mit einem Molekulargewicht Mw von größer als 20000 g/mol und/oder Halobutylkautschuk und/oder Polynorbornen und/oder Isopren-Isobutylen-Copolymer und/oder
Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk, wobei die Kautschuke modifiziert sein können. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.
Diese Modifizierungen und Funktionalisierungen gelten auch für den oben aufgeführten erfindungsgemäß in der Kautschukmischung enthaltenen Butadien-Kautschuk (Polybutadien).

Insbesondere Nitrilkautschuk, hydrierter
Acrylnitrilbutadienkautschuk, Chloroprenkautschuk, Butylkautschuk, Halobutylkautschuk oder
Ethylen-Propylen-Dien-Kautschuk kommen bei der Herstellung von technischen Gummiartikeln, wie Gurte, Riemen und Schläuche, zum Einsatz.

Besonders bevorzugt ist der weitere Kautschuk ein Dienkautschuk und ausgewählt aus der Gruppe bestehend aus synthetischem Polyisopren und natürlichem Polyisopren und Styrol-Butadien-Kautschuk. Bevorzugt handelt es sich bei dem weiteren Dienkautschuk um natürliches Polyisopren. Hiermit wird eine besonders gute Verarbeitbarkeit (Extrudierbarkeit, Mischbarkeit, etc.) der erfindungsgemäßen Kautschukmischung erzielt.

Die erfindungsgemäße Kautschukmischung enthält zudem, insbesondere für die Anwendung im Fahrzeugluftreifen, bevorzugt 10 bis 300 phr, bevorzugt 30 bis 300 phr, besonders bevorzugt 30 bis 150 phr, zumindest eines Füllstoffs. Hierbei kann es sich um alle dem Fachmann bekannten Füllstoffe handeln, wie Kieselsäure, Alumosilicate, Ruß, Kohlenstoffnanoröhrchen, Kreide, Stärke, Magnesiumoxid, Titandioxid oder Kautschukgele.
Bevorzugt enthält die Kautschukmischung wenigstens eine Kieselsäure und/oder wenigstens einen Ruß als Füllstoff.

Dabei sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 40 bis 180 g/kg, besonders bevorzugt 40 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.
Hiermit werden für die Anwendung im Fahrzeugreifen besonders gute Rollwiderstandsindikatoren (Rückprallelastizität bei 70 °C) und Abrieb- und/oder Reißeigenschaften erzielt.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m² /g, besonders bevorzugt von 100 bis 260 m² /g und ganz besonders bevorzugt von 115 bis 235 m² /g, und eine CTAB-Oberfläche (gemäß ASTM D 3765) von 30 bis 400 m² /g, bevorzugt von 30 bis 250 m² /g, besonders bevorzugt von 100 bis 250 m² /g und ganz besonders bevorzugt von 110 bis 230 m² /g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten
Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).

So können als Silan-Kupplungsagenzien z. B.
3-Mercaptopropyltriethoxysilan,
3-Thiocyanato-propyltrimethoxysilan oder
3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden. Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Gemäß einer bevorzugten Ausführungsform der Erfindung ist Kieselsäure als alleiniger oder Hauptfüllstoff enthalten, das heißt, dass die Kieselsäuremenge deutlich größer ist als die Menge an ggf. anderen enthaltenen Füllstoffen. Mit Kieselsäure als alleinigem Füllstoff oder Hauptfüllstoff werden in der erfindungsgemäßen Kautschukmischung, insbesondere für die Anwendung im Laufstreifen von Fahrzeugluftreifen, besonders gute Rollwiderstandsindikatoren erzielt, wobei die sonstigen Reifeneigenschaften wie Nassbremsen und/oder Abriebverhalten und/oder Handling-Verhalten und/oder die Reißeigenschaften auf einem guten Niveau liegen oder sogar verbessert werden. Die Menge an Kieselsäure beträgt hierbei 10 bis 300 phr, bevorzugt 50 bis 250 phr, besonders bevorzugt 50 bis 180 phr, ganz besonders bevorzugt 50 bis 150 phr, wiederum ganz besonders bevorzugt 50 bis 130 phr. Hierbei ist es denkbar, dass die Kautschukmischung zudem 0,1 bis 30 phr, bevorzugt 2 bis 30 phr, besonders bevorzugt 2 bis 10 phr wenigstens eines Rußes enthält.
Gemäß einer bevorzugten Ausführungsform der Erfindung enthält die Kautschukmischung 50 bis 70 phr wenigstens einer Kieselsäure. Gemäß einer weiteren bevorzugten Ausführungsform der Erfindung enthält die Kautschukmischung 105 bis 135 phr wenigstens einer Kieselsäure.

Gemäß einer weiteren bevorzugten Ausführungsform der Erfindung ist Ruß als alleiniger Füllstoff oder als Hauptfüllstoff enthalten, das heißt, dass die Rußmenge deutlich größer ist als die Menge an ggf. anderen enthaltenen Füllstoffen. Mit Ruß als alleinigem Füllstoff oder Hauptfüllstoff werden in der erfindungsgemäßen Kautschukmischung, insbesondere für die Anwendung im Laufstreifen von Fahrzeugluftreifen, ein besonders guter Abriebwiderstand erzielt, wobei die sonstigen Reifeneigenschaften wie Nassbremsen und/oder Rollwiderstandsverhalten und/oder Handling-Verhalten und/oder die Reißeigenschaften auf einem guten Niveau liegen oder sogar verbessert werden. Die Menge an Ruß beträgt hierbei 10 bis 300 phr, bevorzugt 50 bis 250 phr, besonders bevorzugt 50 bis 180 phr, ganz besonders bevorzugt 50 bis 150 phr, wiederum ganz besonders bevorzugt 50 bis 130 phr. Für den Fall, dass neben Ruß ein weiterer Füllstoff enthalten ist, handelt es sich bei diesem bevorzugt um Kieselsäure. Somit ist es auch denkbar, dass die erfindungsgemäße Kautschukmischung Ruß und Kieselsäure in ähnlichen Mengen enthält, wie z.B. 20 bis 100 phr Ruß in Kombination mit 20 bis 100 phr Kieselsäure.
Es ist aber auch denkbar, dass die Kautschukmischung neben Ruß als Hauptfüllstoff zudem 0,1 bis 30 phr, bevorzugt 2 bis 30 phr, besonders bevorzugt 2 bis 10 phr wenigstens einer Kieselsäure enthält.

Es können in der Kautschukmischung noch 0 bis 70 phr, bevorzugt 0,1 bis 60 phr, bevorzugt 0,1 bis 50 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract) oder naphthenische Prozessöle durch Hydrierung wie bspw. in EP 2357219 A1 beschrieben, oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht Mw (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) weitere Harze, insbesondere Klebharze, die nicht unter die oben genannten aromatischen Kohlenwasserstoffharze fallen,
e) Mastikationshilfsmittel, wie z. B. 2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m² /g auf. Es kann aber auch so genanntes nano-Zinkoxid mit einer BET-Oberfläche von 10 bis 60 m² /g verwendet werden.

Die Vulkanisation wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS). In einer bevorzugten Ausführungsform der Erfindung enthält die Kautschukmischung CBS als Beschleuniger. Hierdurch werden besonders gute Reißeigenschaften der Kautschukmischung erzielt. Auch weitere netzwerkbildende Systeme, wie sie beispielsweise unter den Handelsnamen

Vulkuren®, Duralink® oder Perkalink® erhältlich sind, oder netzwerkbildende Systeme, wie sie in der WO 2010/049261 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G [CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5. Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).
Hiermit werden sehr gute Abrieb- und Reißeigenschaften der erfindungsgemäßen Kautschukmischung erzielt.

Außerdem können in der Kautschukmischung
Vulkanisationsverzögerer vorhanden sein.

Eine weitere Aufgabe der vorliegenden Erfindung besteht darin, einen Fahrzeugluftreifen bereitzustellen, der sich ausgehend vom Stand der Technik durch eine weitere Verbesserung im Zielkonflikt Rollwiderstandsverhalten versus Nassgriffeigenschaften auszeichnet. Gelöst wird diese Aufgabe dadurch, dass der Fahrzeugluftreifen in wenigstens einem Bauteil die erfindungsgemäße Kautschukmischung wie oben beschrieben enthält. Dabei gelten alle oben genannten Ausführungen zu den Bestandteilen und deren Merkmale.

Bevorzugt handelt es sich bei dem Bauteil um einen Laufstreifen. Wie dem Fachmann bekannt ist, trägt der Laufstreifen zu einem relativ hohen Anteil zum Gesamtrollwiderstand des Reifens bei. Zudem hängt die Sicherheit des Fahrzeugluftreifens im Fahrbetrieb wesentlich von den Nassgriffeigenschaften, insbesondere dem Nassbremsverhalten, des Laufstreifens ab.

Es ist aber zudem auch denkbar, dass der Fahrzeugluftreifen die Kautschukmischung in wenigstens einem anderen äußeren und/oder inneren Bauteil, einem sogenannten Body-Bauteil, enthält, wie der Seitenwand, Innenseele (Innenschicht), Squeegee, Kernprofil, Gürtel, Schulter, Gürtelprofil, Karkasse, Wulstverstärker, Wulstprofil, Hornprofil und Bandage.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden. Die Herstellung der erfindungsgemäßen Kautschukmischung zur Verwendung als Body- Mischung in Fahrzeugluftreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Rückprallelastizität bei RT und 70 °C gemäß DIN 53 512
- Zugfestigkeit und Reißdehnung bei Raumtemperatur gemäß DIN 53 504
- dynamischer Speichermodul E' bei -30,5 bis -29,8 °C aus Temperaturabhängiger Messung ("Temperatur-Sweep") in Anlehnung an DIN 53513
- Abrieb bei Raumtemperatur gemäß DIN53 516 bzw. DIN/ISO 4649
- Glasübergangstemperatur T_{g} der Kautschukmischung mittels DSC gemäß ISO 11357-1 und 11357-21987 S. 519-527 (Kalibrierte DSC mit Tieftemperatureinrichtung, Kalibrierung nach Gerätetyp und Herstellerangaben, Probe im Aluminiumtiegel mit Aluminiumdeckel)

Verwendete Substanzen:
a) BR: Butadien-Kautschuk, high-cis BR
b) Kieselsäure: VN3, Fa. Evonik
c) Aromatisches Kohlenwasserstoffharz: SYLVATRAXX® 4401 der Firma Arizona Chemical Company, aufgebaut aus alpha-Methylstyrol und Styrol; Mw = 1300 g/mol, Mz = 2018 g/mol; EP = 80 bis 90 °C
d) C₅-Harz: Escorez™ 1102, Fa. Exxon Mobil Chemical, Mw = 4500 g/mol Mz = 15000 g/mol, EP = 100 °C
e) 6PPD + Ozonschutzwachs
f) Silan: TESPD
g) DPG und CBS

**Tabelle 1**

| Bestandteile | Ein h. | V1 | V2 | V3 | E1 | E2 | V4 | V5 | V6 | V7 |
|---|---|---|---|---|---|---|---|---|---|---|
| BR ^{a)} | phr | 100 | 100 | 100 | 100 | 100 | 100 | 100 | 100 | 100 |
| Kieselsäure ^{b)} | phr | 60 | 60 | 60 | 60 | 60 | 60 | 60 | 60 | 60 |
| KW-Harz ^{c)} | phr | - | 20 | 40 | 60 | 80 | - | - | - | - |
| C₅-Harz ^{d)} | phr | - | - | - | - | - | 20 | 40 | 60 | 80 |
| Alterungsschutzmittel e) | phr | 4 | 4 | 4 | 4 | 4 | 4 | 4 | 4 | 4 |
| Stearinsäure | phr | 2,5 | 2,5 | 2,5 | 2,5 | 2,5 | 2,5 | 2,5 | 2,5 | 2,5 |
| ZnO | phr | 2,5 | 2,5 | 2,5 | 2,5 | 2,5 | 2,5 | 2,5 | 2,5 | 2,5 |
| Silan ^{f)} | phr | 4,3 | 4,3 | 4,3 | 4,3 | 4,3 | 4,3 | 4,3 | 4,3 | 4,3 |
| Beschleuniger ^{g)} | phr | 4 | 4 | 4 | 4 | 4 | 4 | 4 | 4 | 4 |
| Schwefel | phr | 2 | 2 | 2 | 2 | 2 | 2 | 2 | 2 | 2 |
| | | | | | | | | | | |
| Eigenschaften | | | | | | | | | | |
| Rückprall b. RT | % | 53 | 56 | 52 | 46 | 40 | 56 | 52 | 47 | 43 |
| Rückprall b. 70 °C | % | 56 | 61 | 61 | 59 | 60 | 62 | 60 | 54 | 49 |
| Diff. Rückprall (70 °C- RT) | | 3 | 5 | 9 | 13 | 20 | 6 | 8 | 7 | 6 |
| Zugfestigkeit | MPa | 7 | 9 | 14 | 14 | 12 | 7 | 9 | 11 | 10 |
| Reißdehnung | % | 239 | 388 | 675 | 813 | 834 | 324 | 492 | 704 | 737 |
| DIN Abrieb | mm³ | 25 | 39 | 44 | 67 | 112 | 36 | 64 | 110 | 156 |
| E' | MPa | 267 | 239 | 62 | 52 | 61 | 335 | 433 | 542 | 679 |
| T_{g} | °C | -104 | -99 | -95 | -91 | -88 | -102 | -101 | -100 | -99 |

Wie aus Tabelle 1 erkennbar ist, führt die Verwendung von gegenüber dem Stand der Technik (V2 und V3) vergleichsweise großen Mengen an Kohlenwasserstoffharz enthaltend aromatische Monomere (E1 und E2) überraschend zu einer deutlichen Verbesserung der Nassgriff- und Rollwiderstandsindikatoren. Je kleiner der Wert für die Rückprallelastizität bei Raumtemperatur ist, desto besser das Nassgriffverhalten. Je größer die Rückprallelastizität bei 70 °C ist, desto besser ist das Rollwiderstandsverhalten der Kautschukmischung. Die erfindungsgemäßen Kautschukmischungen E1 und E2 liegen damit auf einem höheren Niveau hinsichtlich des Zielkonfliktes aus Rollwiderstand und Nassgriff, was insbesondere aus den erhöhten Differenzen der Rückprallelastizitäten (Rückprallelastizität bei 70 °C minus Rückprallelastizität bei RT) deutlich wird. Wie an den Vergleichsbeispielen V4 bis V7 erkennbar ist, gelingt diese Verbesserung mit einem C₅-Harz, welches keine aromatischen Monomere enthält, nicht. Hier führt eine Erhöhung des Harzgehaltes zu sehr hohen Mengen zu einer Verschlechterung im Zielkonflikt Rollwiderstand vs. Nassgriff, was aus der kleiner werdenden Differenz der Rückprallelastizitäten der Vergleichsmischungen V5 bis V7 hervorgeht. Zudem zeigt der Vergleich der erfindungsgemäßen Kautschukmischungen E1 und E2 mit V6 und V7, also den Vergleichsbeispielen mit jeweils der gleichen Harzmenge, dass das Abriebverhalten mit dem aromatischen Kohlenwasserstoffharz deutlich besser ist. Überraschenderweise scheint das aromatische Kohlenwasserstoffharz sich im Gegensatz zum C₅-Harz auch noch in den sehr hohen Mengen von 60 und 80 phr in dem Butadien-Kautschuk zu lösen, was an der vergleichsweise starken Verschiebung der Glasübergangstemperatur T_{g} der Kautschukmischung zu erkennen ist. Weiterhin weisen die erfindungsgemäßen Kautschukmischungen E1 und E2 im Vergleich zu den Vergleichsbeispielen bessere Wintereigenschaften auf, was an den geringeren Werten für den Speichermodul E' im Bereich zwischen -30,5 und -29,8 °C erkennbar ist.

## Patentansprüche

1. Schwefelvernetzbare Kautschukmischung, **dadurch gekennzeichnet, dass** sie wenigstens folgende Bestandteile enthält:
- 60 bis 100 phr wenigstens eines Butadien-Kautschuks und
- 51 phr oder mehr wenigstens eines Kohlenwasserstoffharzes, welches zu 30 bis 100 Gew.-% aus aromatischen Monomeren aufgebaut ist.

2. Schwefelvernetzbare Kautschukmischung nach Anspruch 1, **dadurch gekennzeichnet, dass** sie 51 bis 300 phr wenigstens eines Kohlenwasserstoffharzes, welches zu 30 bis 100 Gew.-% aus aromatischen Monomeren aufgebaut ist, enthält.

3. Schwefelvernetzbare Kautschukmischung nach einem der vorherigen Ansprüche, **dadurch gekennzeichnet, dass** das Kohlenwasserstoffharz zu 30 bis 100 Gew.-% aus wenigstens einem aromatischen Monomer aus der Gruppe bestehend aus alpha-Methylstyrol und/oder Styrol und/oder Vinyltoluol und/oder Inden und/oder Cumaron und/oder Methylinden und/oder Methylcumaron aufgebaut ist.

4. Schwefelvernetzbare Kautschukmischung nach einem der vorherigen Ansprüche, **dadurch gekennzeichnet, dass** das Kohlenwasserstoffharz zu 51 bis 100 Gew.-% aus aromatischen Monomeren aufgebaut ist.

5. Schwefelvernetzbare Kautschukmischung nach einem der vorherigen Ansprüche, **dadurch gekennzeichnet, dass** das Kohlenwasserstoffharz ein Copolymer aus alpha-Methylstyrol und Styrol ist, wobei es zu 100 Gew.-% aus alpha-Methylstyrol und Styrol aufgebaut ist.

6. Schwefelvernetzbare Kautschukmischung nach einem der vorherigen Ansprüche, **dadurch gekennzeichnet, dass** das Kohlenwasserstoffharz einen Erweichungspunkt gemäß ASTM E 28 (Ring und Ball) von 60 bis 200 °C aufweist.

7. Schwefelvernetzbare Kautschukmischung nach einem der vorherigen Ansprüche, **dadurch gekennzeichnet, dass** das Kohlenwasserstoffharz ein Molekulargewicht Mw (Gewichtsmittel) von 500 bis 5000 g/mol und ein Zentrifugenmittelwert Mz von 500 bis 10000 g/mol aufweist.

8. Schwefelvernetzbare Kautschukmischung nach einem der vorherigen Ansprüche, **dadurch gekennzeichnet, dass** sie 10 bis 300 phr wenigstens einer Kieselsäure enthält.

9. Fahrzeugluftreifen, **dadurch gekennzeichnet, dass** er in wenigstens einem Bauteil wenigstens eine Kautschukmischung nach einem der Ansprüche 1 bis 8 enthält.

10. Fahrzeugluftreifen nach Anspruch 9, **dadurch gekennzeichnet, dass** es sich bei dem Bauteil wenigstens um den Laufstreifen handelt.

## Claims

1. Sulfur-crosslinkable rubber blend, **characterized in that** it comprises at least the following constituents:
- 60 to 100 phr of at least one butadiene rubber and
- 51 phr or more of at least one hydrocarbon resin which is built up to the extent of 30 to 100 wt.% from aromatic monomers.

2. Sulfur-crosslinkable rubber blend according to Claim 1, **characterized in that** it comprises 51 to 300 phr of at least one hydrocarbon resin which is built up to the extent of 30 to 100 wt.% from aromatic monomers.

3. Sulfur-crosslinkable rubber blend according to one of the preceding claims, **characterized in that** the hydrocarbon resin is built up to the extent of 30 to 100 wt.% from at least one aromatic monomer from the group consisting of alpha-methylstyrene and/or styrene and/or vinyltoluene and/or indene and/or coumarone and/or methylindene and/or methylcoumarone.

4. Sulfur-crosslinkable rubber blend according to one of the preceding claims, **characterized in that** the hydrocarbon resin is built up to the extent of 51 to 100 wt.% from aromatic monomers.

5. Sulfur-crosslinkable rubber blend according to one of the preceding claims, **characterized in that** the hydrocarbon resin is a copolymer from alpha-methylstyrene and styrene, it being built up to the extent of 100 wt.% from alpha-methylstyrene and styrene.

6. Sulfur-crosslinkable rubber blend according to one of the preceding claims, **characterized in that** the hydrocarbon resin has a softening point according to ASTM E 28 (ring and ball) of from 60 to 200 °C.

7. Sulfur-crosslinkable rubber blend according to one of the preceding claims, **characterized in that** the hydrocarbon resin has a molecular weight Mw (weight average) of from 500 to 5,000 g/mol and a centrifuge average Mc of from 500 to 10,000 g/mol.

8. Sulfur-crosslinkable rubber blend according to one of the preceding claims, **characterized in that** it comprises 10 to 300 phr of at least one silica.

9. Vehicle pneumatic tire, **characterized in that** it comprises in at least one component at least one rubber blend according to one of Claims 1 to 8.

10. Vehicle pneumatic tire according to Claim 9, **characterized in that** the component is at least the tread.

## Revendications

1. Mélange de caoutchouc réticulable au soufre, **caractérisé en ce qu'**il contient au moins les constituants suivants :
- 60 à 100 pce d'au moins un caoutchouc de butadiène et
- 51 pce ou plus d'au moins une résine hydrocarbonée, qui est formée de 30 à 100 % en poids de monomères aromatiques.

2. Mélange de caoutchouc réticulable au soufre selon la revendication 1, **caractérisé en ce qu'**il contient 51 à 300 pce d'au moins une résine hydrocarbonée, qui est formée par 30 à 100 % en poids de monomères aromatiques.

3. Mélange de caoutchouc réticulable au soufre selon l'une quelconque des revendications précédentes, **caractérisé en ce que** la résine hydrocarbonée est formée par 30 à 100 % en poids d'au moins un monomère aromatique du groupe constitué par l'alpha-méthylstyrène et/ou le styrène et/ou le vinyltoluène et/ou l'indène et/ou la coumarone et/ou le méthylindène et/ou la méthylcoumarone.

4. Mélange de caoutchouc réticulable au soufre selon l'une quelconque des revendications précédentes, **caractérisé en ce que** la résine hydrocarbonée est formée par 51 à 100 % en poids de monomères aromatiques.

5. Mélange de caoutchouc réticulable au soufre selon l'une quelconque des revendications précédentes, **caractérisé en ce que** la résine hydrocarbonée est un copolymère d'alpha-méthylstyrène et de styrène, ladite résine étant formée par 100 % en poids d'alpha-méthylstyrène et de styrène.

6. Mélange de caoutchouc réticulable au soufre selon l'une quelconque des revendications précédentes, **caractérisé en ce que** la résine hydrocarbonée présente un point de ramollissement selon ASTM E 28 (anneau et bille) de 60 à 200 °C.

7. Mélange de caoutchouc réticulable au soufre selon l'une quelconque des revendications précédentes, **caractérisé en ce que** la résine hydrocarbonée présente un poids moléculaire Mn (moyenne en poids) de 500 à 5 000 g/mol et une valeur moyenne de centrifugation Mz de 500 à 10 000 g/mol.

8. Mélange de caoutchouc réticulable au soufre selon l'une quelconque des revendications précédentes, **caractérisé en ce qu'**il contient 10 à 300 pce d'au moins une silice.

9. Pneu de véhicule, **caractérisé en ce qu'**il contient dans au moins un composant au moins un mélange de caoutchouc selon l'une quelconque des revendications 1 à 8.

10. Pneu de véhicule selon la revendication 9, **caractérisé en ce que** le composant est au moins la bande de roulement.
